(19) Europäisches Patentamt
European Patent Office
Office européen des brevets

(11) Numéro de publication: **0 204 616 B1**

# (12) FASCICULE DE BREVET EUROPEEN

(45) Date de publication de fascicule du brevet: **17.07.91**

(51) Int. Cl.5: **G01N 31/22**

(21) Numéro de dépôt: **86401129.1**

(22) Date de dépôt: **28.05.86**

(54) **Compositions utiles pour détecter la présence d'oxygène, procédé de préparation de ces compositions et détecteurs d'oxygène les comportant.**

(30) Priorité: **30.05.85 FR 8508109**

(43) Date de publication de la demande:
**10.12.86 Bulletin 86/50**

(45) Mention de la délivrance du brevet:
**17.07.91 Bulletin 91/29**

(84) Etats contractants désignés:
**AT BE CH DE FR GB IT LI LU NL SE**

(56) Documents cités:
**DE-C- 858 027**
**US-A- 2 823 985**
**US-A- 4 379 848**

**CHEMICAL ABSTRACTS, vol. 94, 1981, page 693, abrégé 57318e, Columbus, Ohio, US; C. JALLABERT et al.: "Molecular oxygen activation by (1,10-phenanthroline)copper(I) and water activation by (1,10-phenanthroline)copper(II). Nature and chemical properties of some isolated complexes" & J. MOL. CATAL. 1980, (1), 127-36**

**J. Molecular Catalysis, 7 (1980) pages 127-136**

(73) Titulaire: **Etablissement Public dit: CENTRE NATIQNAL DE LA RECHERCHE SCIENTIFIQUE (CNRS)**
**15, Quai Anatole France**
**F-75007 Paris(FR)**

(72) Inventeur: **Hamon, Jean-René**
**5, Cours d'Helsinki**
**F-35100 Rennes(FR)**
Inventeur: **Lapinte, Claude Jacques**
**3, rue du grand Jardin**
**F-35510 Cesson Savigne(FR)**

(74) Mandataire: **Warcoin, Jacques et al**
**Cabinet Régimbeau 26, avenue Kléber**
**F-75116 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention concerne des indicateurs colorés de présence d'oxygène en milieu humide, des compositions utiles pour la détection de présence d'oxygène les comportant, ainsi qu'un procédé de préparation de ces compositions et des détecteurs de présence d'oxygène.

La présente invention a été faite au Laboratoire de Chimie des Organométalliques de l'Université de Rennes I, Unité associée au Centre National de la Recherche Scientifique n° 415.

De nombreux produits doivent être conservés à l'abri de l'oxygène et souvent en milieu humide. En particulier, des produits chimiques, tels que des peintures, des vernis, des colles, des produits pharmaceutiques, ou des produits agro-alimentaires sont couramment conditionnés sous vide ou sous atmosphère inerte car la présence d'oxygène leur cause des détériorations.

Détecter les défectuosités de tels emballages sous vide ou sous gaz inerte, c'est-à-dire détecter la présence d'oxygène à l'intérieur des conditionnements est un problème délicat. En effet, pour mettre en évidence la contamination par l'oxygène de l'emballage protégeant les produits, on connaît actuellement deux moyens. Le premier consiste à prendre un échantillonnage du stock pour tester la qualité du produit par prélèvement. Cette solution implique l'ouverture du conditionnement et donc la dégradation de l'échantillon. Un autre moyen consiste, pour les emballages transparents, à observer directement la détérioration, avec l'inconvénient que celle-ci n'apparaît clairement que lorsque la contamination par l'oxygène est déjà bien avancée.

Il a déjà été décrit dans la littérature, la réactivité de certains composés chimiques vis-à-vis de l'oxygène (DE-C-858027) et notamment d'un complexe phénanthroline cuivreux (Chemical Abstracts, Vol 94-1981-5731e et J. of Molecular Catalysis 7 (1980) p. 127). Cependant, les résultats obtenus témoignent d'une activité non spécifique à l'oxygène de ces complexes métalliques dans un milieu aqueux.

La présente invention propose un moyen de détecter très rapidement la présence d'oxygène dans un conditionnement, même en milieu humide, au moyen d'un indicateur coloré changeant de couleur au contact de l'oxygène, même en très petite quantité.

La présente invention concerne des compositions utiles pour détecter la présence d'oxygène en milieu humide comportant au moins, d'une part, un complexe de formule générale

$(LMX)_n$

dans laquelle le ligand L est choisi parmi les groupements :

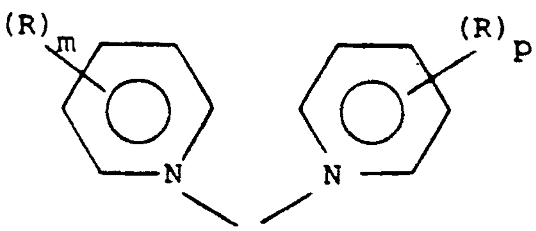

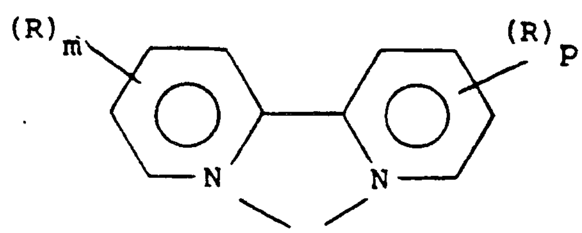

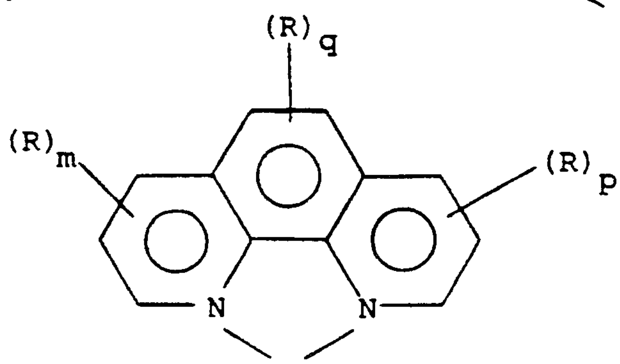

où :

R représente Cl, Br, $NO_2$, $C_{1-4}$-alkoxyle, $C_{1-4}$-alkyle,

m et p sont compris entre O et 3,

q est compris entre O et 2,

le substituant R sur les noyaux pyridine n'occupant jamais une position vicinale de l'atome d'azote,
X = Cl, Br, I, $NO_3$, $ClO_4$,
M représente Cu ou Mn, et
n est égal à 1 ou 2; ledit complexe étant utilisé à titre d'indicateur coloré de présence d'oxygène dans ce milieu, et d'autre part, un agent gélifiant à titre d'agent stabilisant dudit complexe, en solution dans un solvant approprié.

Dans la formule générale I, la liaison M-X représente soit une liaison covalente, soit une liaison ionique, selon la nature de l'anion.

A l'état solide, ces composés existent généralement sous forme dimérique (n = 2). En solution diluée, c'est sous forme de monomère (n = 1) qu'ils réagissent avec l'oxygène.

Parmi les composés de formule I, on utilise particulièrement à titre d'indicateur coloré de présence d'oxygène en milieu humide, les complexes de formules :

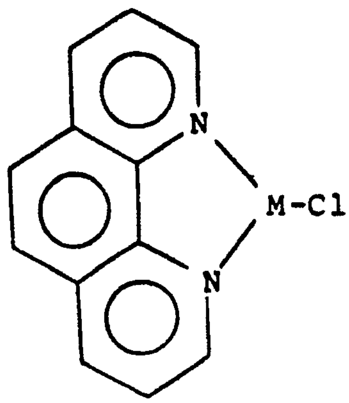
ou
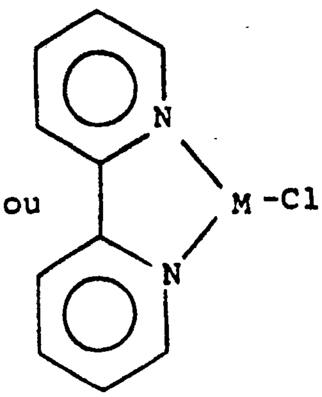
ou
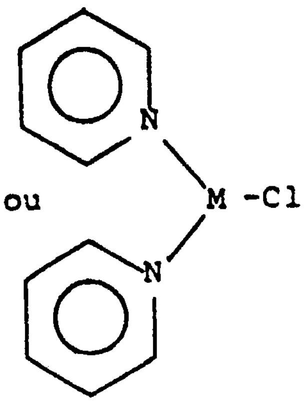

où M représente Cu ou Mn.

En solution, en général sous forme de monomère, ces complexes organométalliques des métaux de transition sous forme réduite ont la propriété de s'oxyder avec un franc changement de couleur en présence d'oxygène. La réaction avec l'oxygène est rapide malgré des valeurs de potentiel redox défavorables (plus de 0,5 V). Du fait de leur relativement faible potentiel redox (environ +0,200 V/ ECS dans le méthanol) ces complexes ne réagissent pas avec l'eau. C'est pourquoi ces complexes organométalliques peuvent être utilisés pour détecter la présence d'oxygène, même en milieu humide.

Ainsi, dans le cas du complexe 1-10 phénanthroline-CuCl, le complexe orange en absence d'oxygène devient bleu-vert au contact de l'oxygène, et sa couleur ne change pas en présence d'eau.

L'effet électronique qui résulte de la substitution des ligands modifie la vitesse des réactions d'oxydation en particulier et peut être utilisé pour moduler la sensibilité du capteur. Toutefois, la substitution en position vicinale de l'azote ralentit les réactions d'oxydation considérablement.

Ces complexes organométalliques ont l'avantage d'être relativement stables en solution à l'abri de l'oxygène, leur dismutation étant assez lente. De plus, l'adjonction de ligands polydentés, comme des polypeptides, contribue à augmenter la stabilité de ces complexes en solution.

Pour augmenter la stabilité des complexes en solution, en isolant le complexe de l'eau par effet hydrophobe autour du complexe, on ajoute à la solution un agent gélifiant comme un polypeptide tel que la gélatine, dans des proportions de 1 à 10 % dans la composition, un polypeptide court et/ou un tensio-actif, tel que du lauryl-sulfate, à des concentrations miscellaires, par exemple $10^{-2}$mol. pour le lauryl-sulfate.

Ainsi, par exemple, en présence de gélatine alimentaire la stabilité du complexe orange 1,10 phénanthroline-CuCl est de l'ordre d'une année à une température d'environ 10° C.

Comme agent gélifiant naturel, on peut donc utiliser de la gélatine, mais on peut également utiliser des gommes telles que les gommes arabiques ou adragante. On peut également utiliser des agents gélifiants synthétiques.

Les solvants particulièrement adaptés selon l'invention sont les alcools aliphatiques inférieurs, l'acétone et leurs mélanges avec l'eau. En particulier, pour le complexe I,I0 phénanthroline-CuCl, on utilise de préférence l'éthanol, l'acétone, ou un mélange eau/éthanol ou eau / acétone. La vitesse de réponse de ces compositions, utile pour détecter la présence d'oxygène varie selon la valeur de la proportion eau/acétone ou eau/alcool du mélange. On utilise de préférence des mélanges comportant environ 70 à 90 % d'eau.

Les couleurs des formes réduites et oxydées dépendent du couple métal-ligand et de la rigidité du ligand. Ainsi, les complexes bipyridyle-CuCl et 1,10-phénanthroline-CuCl sont orangés et deviennent bleu-vert après oxydation alors que le complexe (pyridine)$_2$-CuCl de couleur jaune pâle devient bleu. La densité de la couleur ainsi que la sensibilité de ces compositions dépendent de la concentration en indicateur coloré. On préfère en particulier des concentrations molaires comprises entre $10^{-3}$ et $10^{-2}$.

Dans un mode particulier de réalisation de l'invention, la composition utile pour détecter la présence d'oxygène présente une structure de gel, mélange d'une solution de l'indicateur coloré dans un solvant acceptable et d'un support sous forme de gel, par exemple de la gélatine alimentaire. Cette structure est particulièrement adaptée à l'utilisation ultérieure de ces compositions, comme on le verra par la suite.

La présente invention concerne également un procédé de préparation d'une composition utile pour détecter la présence d'oxygène, caractérisé en ce que l'on réalise :

a) la mise en solution d'un complexe indicateur coloré de présence d'oxygène en milieu humide tel que défini précédemment dans un solvant acceptable, tel qu'un alcool aliphatique inférieur ou l'acétone, en milieu exempt d'oxygène, et éventuellement

b) l'adjonction, en milieu exempt d'oxygène, de la solution à un gel, pour obtenir une composition selon l'invention.

Les exemples décrivent la préparation de certains complexes utiles selon l'invention. Les complexes au manganèse sont réalisés et mis en oeuvre de manière similaire.

Pour préparer les compositions selon l'invention, on dissout, sous atmosphère exempte d'oxygène, le complexe préparé dans l'acétone ou l'éthanol. La solution obtenue peut être ensuite ajoutée à une solution d'un agent gélifiant, toujours sous atmosphère exempte d'oxygène, pour obtenir une solution finale contenant 70 à 90 % d'eau. Comme exemple d'agent gélifiant, on citera particulièrement la gélatine alimentaire, bien que d'autres agents naturels ou synthétiques soient utilisables.

On dispose donc d'un gel dans lequel est incorporé l'indicateur coloré. Cette structure permet non seulement de détecter qualitativement la présence d'oxygène, par changement de couleur du gel, mais encore d'évaluer quantitativement l'oxygène présent dans la mesure où, la diffusion de l'oxygène étant progressive dans la structure sous forme de gel, le changement de couleur progresse également dans la structure gélifiée.

Si l'on souhaite simplement détecter qualitativement la présence d'oxygène dans une enceinte contrôlée, on peut utiliser comme détecteur de présence d'oxygène un support incorporant l'indicateur coloré selon l'invention ou une composition selon l'invention.

La présente invention concerne donc également un détecteur de présence d'oxygène comportant une composition selon l'invention incorporée à un support poreux. On introduit ce détecteur dans l'emballage au moment du conditionnement sous vide ou sous gaz inerte.

On peut également utiliser comme détecteur un récipient quelconque rempli d'une composition selon l'invention sous forme de solution ou de gel, laissant apparaître le changement de couleur et dont l'une des parois est perméable à l'oxygène par exemple un récipient transparent dont l'ouverture est obturée par une membrane perméable au gaz, ou un tube capillaire rempli de gel, ou un récipient transparent et perméable à l'oxygène, ou une ampoule autocassable remplie sous atmosphère inerte de composition selon l'invention , que l'on casse au moment du test.

Dans le cas où l'on veut non seulement contrôler la présence d'oxygène, mais également la quantité d'oxygène présente dans le conditionnement, ou la progression de la contamination par l'oxygène, on préfèrera utiliser comme détecteur un récipient de forme oblongue, comme un tube de verre ou de matière plastique rempli d'une composition selon l'invention sous forme de gel. L'une des extrémités est éventuellement obturée par une membrane perméable au gaz, par exemple un film de polystyrène ou de polyéthylène comparable aux films plastiques utilisés pour la conservation des aliments. Cette fine membrane offre l'avantage d'empêcher le dessèchement du capteur et de le séparer des produits conditionnés.

Pour réaliser ces détecteurs, on remplit sous atmosphère inerte de petits tubes de verre ou de plastique avec de la gélatine alimentaire en milieu aqueux préalablement additionnée de solution alcoolique ou acétonique d'indicateur coloré, à une température d'environ 50° C. Après refroidissement, on obture les tubes avec un film plastique perméable au gaz.

En présence d'oxygène, le gel change de couleur à partir de la surface protégée par la membrane perméable. La vitesse de progression de l'oxygène à l'intérieur du capteur, qui détermine le changement de couleur du gel, est de l'ordre de quelques mm par heure. Cette vitesse peut être diminuée ou augmentée en modifiant le rapport eau/alcool ou eau/acétone de la composition, la concentration en indicateur, l'épaisseur de la membrane et la densité du gel. La sensibilité du capteur dépend également de ces facteurs. Les détecteurs selon l'invention ont un seuil de sensibilité de l'ordre de $10^{-6}$ mole d'oxygène.

On peut également employer des tubes transparents au mètre, coupés au moment de la mise en place, dont les soudures sont perméables au gaz et/ou poreuses, ou des tubes eux-mémes perméables au gaz et/ou poreux.

On place ces détecteurs dans les emballages au moment du conditionnement. Ils sont utiles, notamment dans les emballages de produits alimentaires, mais en général dans toute enceinte à atmosphère contrôlée.

Dans le cas des détecteurs sous forme de récipient contenant une composition comportant de la gélatine, placés dans des conditionnements à conserver à l'abri de la chaleur, ces détecteurs peuvent aussi contribuer à détecter la rupture de la chaîne du froid. En effet, à une température supérieure à 30° C, la composition redevient fluide dans le récipient ; par reprise de la chaîne du froid, la composition redevient solide dans une forme différente de sa forme initiale dans le récipient. La couleur de l'indicateur rend perceptible ce changement de forme et donc la rupture de la chaîne du froid.

Selon une variante, il est possible d'utiliser de la gélatine réticulée, insensible aux différences de température ou d'adjoindre aux compositions un agent de réticulation maintenant la structure de gel même à des températures plus élevées, de l'ordre de 50 à 70°, par exemple.

D'autres avantages et caractéristiques de la présente invention apparaîtront à la lecture des exemples ci-après.

EXEMPLE 1 :

Préparation de Cu(I)Cl.

CuCl est préparé par réduction de $CuCl_2$, $2H_2O$ (Prolabo) par l'acide ascorbique (Merck) ou par purification du Cu(I)Cl commercial selon la littérature (Andrieth L.F., Bailar J.C., Ferneluis W.C., Johnson w.C., Kork R.E., Inorg. Synth., 1946, 2,1).

EXEMPLE 2 :

Préparation du complexe 1-10 phénanthroline Cu(I)Cl

A une suspension de 1,98 g (20 mmoles) de CuCl dans 50 ml de $CH_2Cl_2$ agitée vigoureusement, est additionné goutte à goutte, à l'aide d'une ampoule à brome, et sous atmosphère inerte (argon ou azote), une solution de 3,96 g (20 mmoles) de 1-10 phenantroline (Janssen) dans 50 ml de $CH_2Cl_2$ A la fin de l'addition, la solution est de couleur orangée très foncée. Cette solution est ensuite filtrée par canule sous argon, concentrée sous vide jusqu'à un volume de 10 ml et l'addition de 100 ml de pentane précipite quantitativement 5,58 g (20 mmoles) de complexe 1-10 phenanthroline Cu(I)Cl (orange-brun), isolé par filtration sous atmosphère inerte et séché sous vide ($10^{-2}$mm Hg pendant 2 heures).

La mise en oeuvre peut être faite également en une seule étape en partant d'une source d'ions cuivreux [$Cu(CH_3CN)_4ClO_4$] à laquelle on ajoute in situ la phenanthroline (Crumbliss A.L., Gestaut L.J., J.Coord. Chem., 1976, 5, 109-111)

EXEMPLE 3 :

Indicateur coloré détecteur d'oxygène

0,11 g du complexe 1-10 phenanthroline Cu(I)Cl, préparé selon la méthode décrite ci-dessus, sont dissous à 20° C dans 8 ml de $C_2H_5OH$ et transféré par canule sous atmosphère inerte dans 31 ml de solution aqueuse (eau distillée) de 3 g de gélatine alimentaire (Prolabo) maintenue à 50° C. Cette solution orangée ($10^{-2}$ M) est ensuite transférée sous argon dans des ampoules autocassables de 8 mm de diamètre et scellées sous vide après congélation à -196° C. Ces échantillons, prêts à l'emploi, sont conservés au réfrigérateur. Si une ampoule est ouverte à l'air, on observe la diffusion progressive de l'oxygène grâce au changement de couleur provoqué par l'oxydation du complexe 1-10 phenanthroline Cu-(I)Cl de couleur orangée en complexe oxydé [1-10 phenanthroline Cu(II)ClOH]$_2$ de couleur turquoise.

EXEMPLE 4 :

Préparation du complexe 2-2' bipyridyl Cu(I)Cl

A une suspension de 1,98 g (20 mmoles) de CuCl dans 50 ml de $CH_2Cl_2$ à 20° C, agitée vigoureusement, est additionné goutte à goutte à l'aide d'une ampoule à brome et sous atmosphère inerte (argon ou azote), une solution de 3,12 g (20 mmoles) de 2-2' bipyridyl (Fluka) dans 50 ml de $CH_2Cl_2$. A la

fin de l'addition, la solution est de couleur orangée très foncée. Cette solution est ensuite filtrée par canule sous argon, concentrée sous vide jusqu'à un volume de 10 ml et l'addition de pentane précipite quantitativement 5,10 g (20 mmoles) de complexe 2-2' bipyridyl Cu(I)Cl (orangé-brun) isolé par filtration sous atmosphère inerte et séché sous vide ($10^{-2}$ mm Hg pendant 2 heures). Kitagawa S; et Munakata M. préparent ce composé par une méthode voisine (Inorg. Chem., 1981, 20, 2261-2267)

EXEMPLE 5 :

Indicateur coloré détecteur d'oxygène

0,24 g du complexe 2,2' bipyridyl Cu(I)Cl, préparé selon la méthode décrite ci-dessus, sont dissous à 20° C dans 10 ml de $CH_3COCH_3$et transférés par canule sous atmosphère inerte dans 70 ml de solution aqueuse (eau distillée) de 5,25 g de gélatine alimentaire (Prolabo) maintenue à 50° C. Cette solution orangée ($10^{-2}$ M) est ensuite transférée sous argon dans des ampoules autocassables de 8 mm de diamètre et scellées sous vide.

Ces échantillons prêts à l'emploi sont conservés au réfrigérateur. Si une ampoule est ouverte à l'air, on observe la diffusion progressive de l'oxygène grâce au changement de couleur provoqué par l'oxydation du complexe 2,2' bipyridyl Cu(I)Cl de couleur orangée (λ max : 417,520 nm) en complex oxydé [2,2'bipyridyl Cu (II)ClOH]$_2$ de couleur turquoise (λ max : 632 nm).

EXEMPLE 6 :

Détection de l'oxygène de l'air

L'indicateur préparé selon les exemples 4 et 5 permet de déterminer le temps d'exposition à l'oxygène de l'air par la mesure de la hauteur de gel devenu turquoise.

| Temps d'exposition à l'air | Hauteur de gel devenu turquoise |
|---|---|
| 15 minutes | ménisque décoloré |
| 1 heure | 1 mm |
| 24 heures | 7-8 mm |
| 48 heures | 13-15 mm |
| 72 heures | 20-22 mm |

Remarque :

Dans certains cas, avant l'apparition de la couleur turquoise, une couleur gris pâle intermédiaire est observée.

EXEMPLE 7 :

Préparation du comlpexe (pyridine)$_2$Cu(I)Cl

A une suspension de 1,98 g (20 mmoles) de CuCl dans 50 ml de $CH_2Cl_2$ à 20° C, agitée vigoureusement, est additionnée goutte à goutte, à l'aide d'une ampoule à brome et sous atmosphère inerte (argon ou azote), une solution de 3,23 ml (40 mmoles) de pyridine dans 50 ml de $CH_2Cl_2$. A la fin de l'addition, la solution est de couleur vert pâle. Cette solution est ensuite filtrée par canule sous argon, concentrée sous vide jusqu'à un volume de 10 ml et l'addition de pentane précipite 2,5 g de complexe (pyridine)$_2$Cu(I)Cl (vert pâle ; rendement non optimisé, environ 50 %) isolé par filtration sous atmosphère inerte et séché sous vide ($10^{-2}$ mm Hg pendant 2 heures).

EXEMPLE 8 :

Indicateur coloré détecteur d'oxygène

0,154 g du complexe $(pyridine)_2Cu(I)Cl$, préparé selon la méthode décrite ci-dessus, sont dissous à 20° C dans 7,5 ml de $C_2H_5OH$ et transférés par canule sous atmosphère inerte dans 52 ml de solution aqueuse (eau distillée) de 3,75 g de gélatine alimentaire (Prolabo) maintenue à 50° C. Cette solution écrue (couleur gélatine) ($10^{-2}$ M) est ensuite transférée sous argon dans des ampoules autocassables de 8 mm de diamètre et scellées sous vide après congélation à -196° C. Ces échantillons prêts à l'emploi, sont conservés au réfrigérateur. Si une ampoule est ouverte à l'air, on observe la diffusion progressive de l'oxygène grâce au changement de couleur provoqué par l'oxydation du complex $(pyridine)_2Cu(I)Cl$ de couleur écrue en complexe oxydé $[(pyridine)_2Cu(II)ClOH]_2$ de couleur bleu-océan.

**Revendications**

1. Composition utile pour détecter la présence d'oxygène en milieu humide, et comportant au moins, d'une part, complexe de formule

$(LMX)_n$

dans laquelle le ligand L est choisi parmi les groupements :

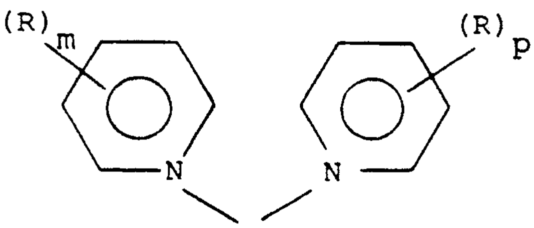
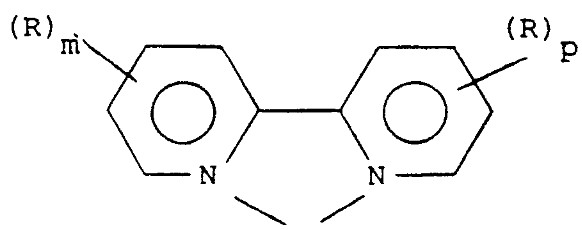
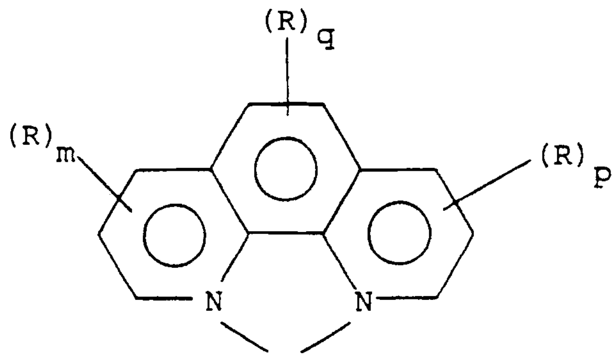

où :
R représente Cl, Br, $NO_2$, $C_{1-4}$-alkoxyle, $C_{1-4}$-alkyle,
m et p sont compris entre O et 3,
q est compris entre O et 2,
le substituant R sur les noyaux pyridine n'occupant jamais une position vicinale de l'atome d'azote,
X = Cl, Br, I, $NO_3$, $ClO_4$,
M représente Cu ou Mn, et
n est égal à 1 ou 2; ledit complexe étant utilisé à titre d'indicateur coloré de présence d'oxygène dans ce milieu, et d'autre part, un agent gélifiant à titre d'agent stabilisant dudit complexe en solution dans un solvant approprié.

2. Composition selon la revendication 1, caractérisée en ce qu'elle comporte au moins un complexe de formule

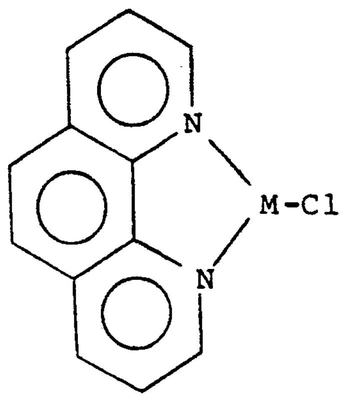

ou

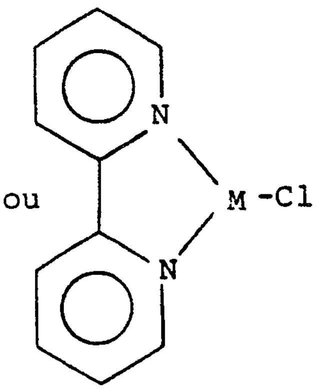

ou

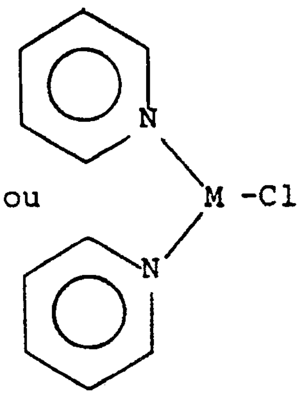

où M représente Cu ou Mn.

3. Composition selon la revendication 1 ou 2, caractérisée en ce que le solvant est un alcool aliphatique inférieur ou l'acétone.

4. Composition selon l'une des revendications 1 à 3, caractérisée en ce qu'elle comporte 1 à 10 % dudit agent gélifiant et 70 à 90 % de solvant.

5. Composition selon l'une des revendications 1 à 4, caractérisée en ce que l'agent gélifiant est la gélatine et en ce que le solvant comporte de 70 à 90 % d'eau.

6. Composition selon l'une des revendications 1 à 5, caractérisée en ce que la concentration molaire en indicateur coloré est comprise entre $10^{-3}$ et $10^{-2}$.

7. Procédé de préparation d'une composition selon l'une des revendications 1 à 6, caractérisé en ce qu'on réalise :
   a) la mise en solution d'un complexe indicateer coloré de présence d'oxygène en milieu humide,tel que défini dans la revendication 1 ou 2, dans un solvant approprié, tel qu'un alcool aliphatique inférieur, en particulier l'éthanol ou l'acétone, et
   b) l'adjonction de la solution à un gel, en milieu exempt d'oxygène,pour obtenir une composition utile et stable pour la détection d'oxygène en milieu humide.

8. Procédé selon la revendication 7, caractérisé en ce que le gel est à base de gélatine alimentaire en milieu aqueux contenant 70 à 90 % d'eau.

9. Détecteur de présence d'oxygène comportant une composition selon l'une des revendications 1 à 6.

10. Détecteur de présence d'oxygène comportant la composition selon l'une des revendications 1 à 6 incorporée à un support poreux ou contenue dans un récipient.

11. Détecteur de présence d'oxygène constitué d'un récipient rempli d'une composition selon l'une des revendications 1 à 6, comportant au moins une partie transparente et au moins une partie perméable à l'oxygène.

**Claims**

1. Composition useful for detecting the presence of oxygen in a humid medium, and comprising at least, on the one hand, one complex of the formula

   $(LMX)_n$ (I)

   in which the ligand L is selected from among the groups :

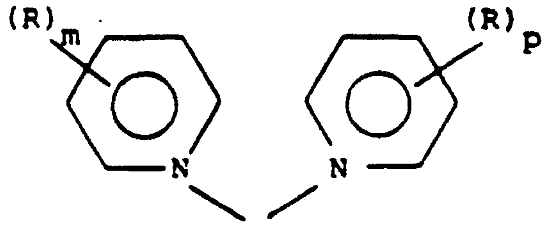

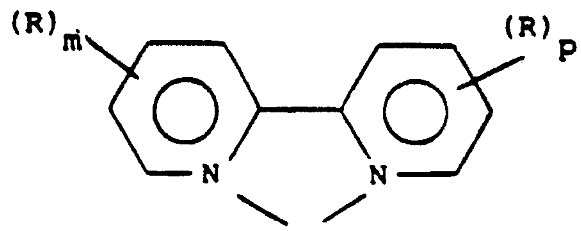

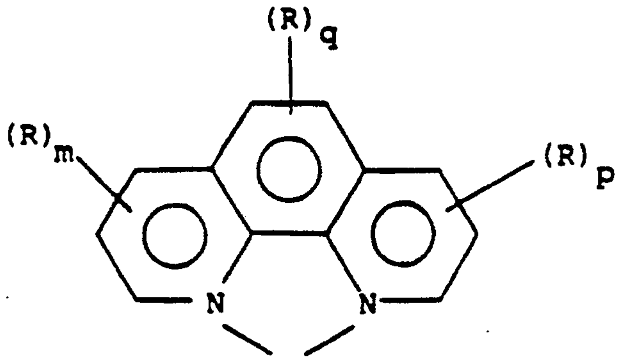

where :
R represents Cl,Br,$NO_2$,$C_{1-4}$-alkoxyl, $C_{1-4}$-alkyl,
m and p are comprised between O and 3,
q is comprised between O and 2,
substituent R on the pyridine nuclei never occupying a position neighboring the nitrogen atom,
X = Cl,Br,I,$NO_3$,$ClO_4$,
M represents Cu or Mn, and
n is equal to 1 or 2; the said complex being used as colored indicator of the presence of oxygen in this medium, and on the other hand a jelling agent as a stabilizing agent for the aforementioned complex, in solution in an appropriate solvent.

**2.** Composition according to claim 1, characterized in that it comprises at least one complex of the formula

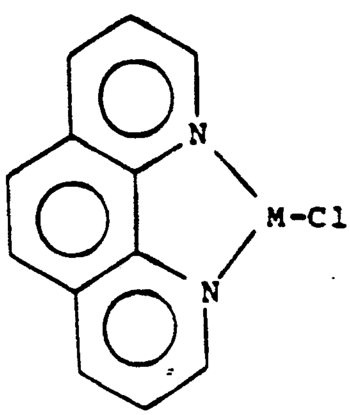

ou

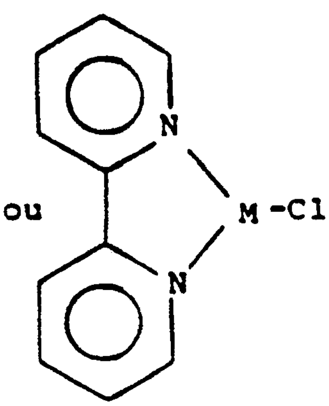

ou

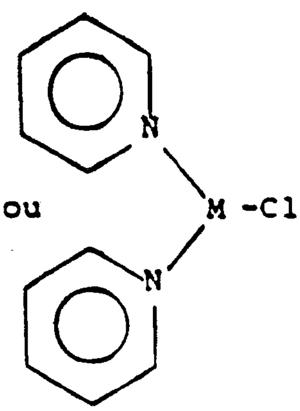

where M represents Cu or Mn.

**3.** Composition according to claim 1 erized in that the solvent is a lower aliphatic alcohol or acetone.

**4.** Composition according to one of the claims 1 to 3, characterized in that it comprises 1 to 10% of a jelling agent and 70 to 90% of solvent.

**5.** Composition according to one of the claims 1 to 4, characterized in chat the jelling agent is gelatin and

in that the solvent comprises from 70 to 90% of water.

6. Composition according to one of the claims 1 to 5, characterized in that the molar concentration of colored indicator is comprised between $10^{-3}$ and $10^{-2}$.

7. Process for the preparation of a composition according to one of the claims 1 to 6, characterized in that there is carried out:
   a) the placing in solution of a colored indicator complex of the presence of oxygen in a humid medium, as defined in claim 1 or 2, in an appropriate solvent, such as a lower aliphatic alcohol, in particular ethanol or acetone, and
   b) the addition of the solution to a gel, in a medium free from oxygn, to obtain a composition useful and stable for the detection of oxygen in a humid medium.

8. Process according to claim 7, characterized in that the gel is based on food gelatin in an aqueous medium containing 70 to 90% of water.

9. Detector of the presence of oxygen comprising a composition according to one of the claims 1 to 6.

10. Detector of the presence of oxygen comprising the composition acording to one of the claims 1 to 6 incorporated with a pourous support or contained in a container.

11. Detector of the presence of oxygen constituted by a container filled with a composition according to one of the claims 1 to 6, comprising at least a transparent portion and at least one portion permeable to oxygen.

**Patentansprüche**

1. Nützliche Zusammensetzung zur Bestimmung des Vorhandenseins von Sauerstoff in feuchtem Milieu, die zumindest einerseits einen Komplex der Formel

   $(LMX)_n$

   umfaßt. in dem der Ligand L aus den Gruppierungen:

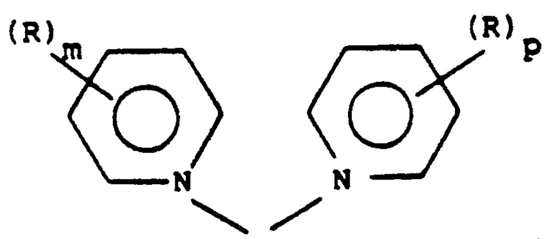

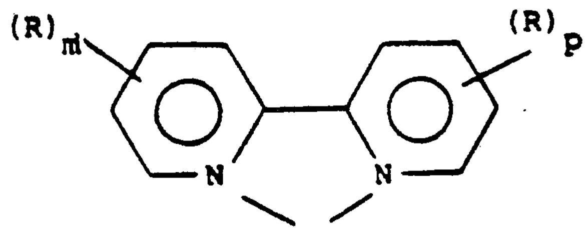

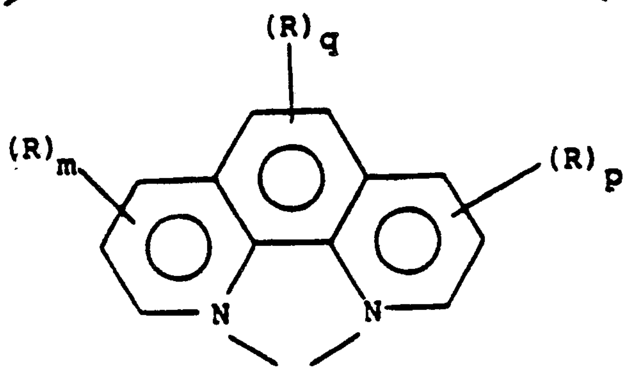

ausgewählt ist, in denen:
R Cl, Br, $NO_2$, $C_{1-4}$-Alkoxyl, $C_{1-4}$-Alkyl darstellt,
m und p zwischen 0 und 3 liegen,

q zwischen 0 und 2 liegt,
der Substituent R an den Pyridinringen niemals eine dem Stickstoffatom benachbarte Position einnimmt,
X = Cl, Br, J, $NO_3$, $ClO_4$,
M Cu oder Mn darstellt, und
n 1 oder 2 ist;
wobei besagter Komplex als Farbindikator für das Vorhandensein von Sauerstoff in diesem Milieu verwendet wird, und andererseits ein Gelierungsmittel als Stabilisierungsmittel für besagten Komplex in Lösung in einem geeigneten Lösungsmittel, umfaßt.

**2.** Zusammensetzung nach Anspruch 1, dadurch gekennzeichnet, daß sie wenigstens einen Komplex der Formel

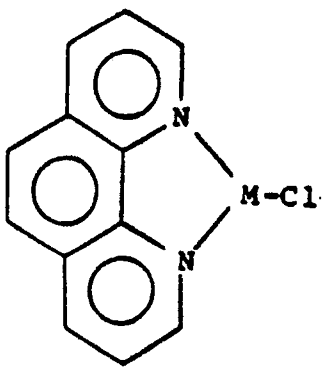

oder

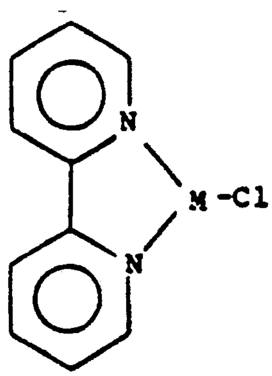

oder

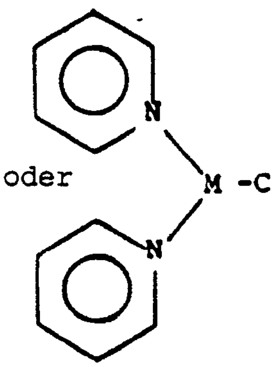

umfaßt, in denen M Cu oder Mn darstellt.

**3.** Zusammensetzung nach Anspruch 1 oder 2, dadurch gekennzeichnet, daß das Lösungsmittel ein niederer aliphatischer Alkohol oder Aceton ist.

**4.** Zusammensetzung nach einem der Ansprüche 1 bis 3, dadurch gekennzeichnet, daß sie 1 bis 10 % besagten Gelierungsmittels und 70 bis 80 % Lösungsmittel umfaßt.

**5.** Zusammensetzung nach einem der Ansprüche 1 bis 4, dadurch gekennzeichnet, daß das Gelierungsmittel Gelatine ist und daß das Lösungsmittel 70 bis 90 % Wasser umfaßt.

**6.** Zusammensetzung nach einem der Ansprüche 1 bis 5, dadurch gekennzeichnet, daß die molare Konzentration an Farbindikator zwischen $10^{-3}$ und $10^{-2}$ liegt.

**7.** Verfahren zur Herstellung einer Zusammensetzung nach einem der Ansprüche 1 bis 6, gekennzeichnet durch folgende Schritte:
a) In-Lösung-Bringen eines Farbindikatorkomplexes für das Vorhandensein von Sauerstoff in feuchtem Milieu, wie er in Anspruch 1 oder 2 definiert ist, in einem geeigneten Lösungsmittel, wie einem niederen aliphatischen Alkohol, insbesondere Ethanol, oder Aceton, und
b) Zugeben der Lösung zu einem Gel, in sauerstofffreiem Milieu, um eine nützliche und stabile Zusammensetzung zur Bestimmung von Sauerstoff in feuchtem Milieu zu erhalten.

**8.** Verfahren nach Anspruch 7, dadurch gekennzeichnet, daß das Gel auf Lebensmittelgelatine in wäßrigem Milieu beruht, enthaltend 70 bis 90 % Wasser.

**9.** Indikator für das Vorhandensein von Sauerstoff, der eine Zusammensetzung nach einem der Ansprüche 1 bis 6 umfaßt.

**10.** Indikator für das Vorhandensein von Sauerstoff, der die Zusammensetzung nach einem der Ansprüche 1 bis 6 umfaßt, eingebaut in einen porösen Träger oder enthalten in einem Gefäß.

**11.** Indikator für das Vorhandensein von Sauerstoff, der aus einem mit einer Zusammensetzung nach

einem der Ansprüche 1 bis 6 gefüllten Gefäß besteht, das zumindest einen durchsichtigen Teil und zumindest einen für Sauerstoff durchlässigen Teil umfaßt.